# EUROPÄISCHE PATENTANMELDUNG

(11) **EP 0 611 912 A1**
(43) Veröffentlichungstag der Anmeldung: **24.08.1994**
(21) Anmeldenummer: 94101147.0
(22) Anmeldetag: 27.01.1994
(51) Int. Cl.: F16L 47/00, F16L 41/06, F16L 47/02

(54) **Verfahren und Anschlussvorrichtung zum Anschliessen einer Abzweigleitung an eine fluidführende Hauptleitung**

(30) Priorität: 13.02.1993 DE 4304430; 10.06.1993 DE 4319292
(71) Anmelder: RHEINAUER MASCHINEN- UND ARMATURENBAU FAULHABER & TRUTTENBACH KG, 77863 Rheinau-Rheinbischofsheim (DE)
(72) Erfinder: Almert, Adam, Ing., D-77866 Rheinau (DE)
(74) Vertreter: Lasch, Hartmut Dipl.-Ing.

(57) **Zusammenfassung**

Um eine Abzweigleitung schnell und in einfacher Weise an eine unter Druck stehende Hauptleitung (10) anschließen zu können, wird ein Anschlußstück (20) in fluiddichter Weise auf der Außenseite der Hauptleitung (10) angebracht. Das Anschlußstück (20) umfaßt einen im wesentlichen senkrecht zur Hauptleitung (10) sowie horizontal verlaufenden Rohrstutzen (23) sowie eine an dem Rohrstutzen (23) angeordnete Ventilvorrichtung (22), deren Ventilkörper (25) wahlweise in eine den Strömungskanal (27) des Rohrstutzen (23) freigebende oder absperrende Stellung gebracht werden kann. Auf das freie Ende des Rohrstutzens (23) wird in fluiddichter Weise eine Bohrvorrichtung (30) aufgebracht, mit der die Wandung (11) der Hauptleitung (10) durch den Rohrstutzen (23) und die Ventilvorrichtung (22) hindurch angebohrt werden kann. Nachdem die Bohrspitze (33) der Bohrvorrichtung (30) bis hinter die Ventilvorrichtung (22) zurückgezogen ist, wird der Strömungskanal (27) des Rohrstutzens (23) mittels des Ventilkörpers (25) geschlossen und die Bohrvorrichtung (30) abgenommen. Abschließend wird die Abzweigleitung am freien Ende des Rohrstutzens (23) angebracht. Die Anschlußvorrichtung zeichnet sich vorzugsweise dadurch aus, daß eine die Außenseite der Hauptleitung (10) umgebende Manschette (21) bzw. Schelle, das Gehäuse (24) der Ventilvorrichtung (22) und der Rohrstutzen (23) aus einem einstückigen Kunststoff-Teil gebildet sind.

## Beschreibung

Die Erfindung betrifft ein Verfahren sowie eine entsprechende Anschlußvorrichtung, mit dem bzw. der eine Abzweigleitung an eine fluidführende Hauptleitung anschließbar ist.

Im Rohrleitungsbau tritt häufig das Problem auf, daß an eine unterirdisch verlegte Hauptleitung, beispielsweise die Netzleitung einer Gas- oder Wasserversorgung, eine weitere Abzweigleitung bzw. Hausleitung angeschlossen werden soll. Zu diesem Zweck wird ein entsprechender Abschnitt der Hauptleitung freigelegt und um die üblicherweise aus Kunststoff, beispielsweise Polyäthylen bestehende Hauptleitung wird eine Kunststoffmanschette oder -schelle herumgelegt, in die eine Heizvorrichtung eingebettet ist. Durch Aktivieren der Heizvorrichtung kann die Wandung der Hauptleitung sowie die Manschette bzw. Schelle oberflächlich aufgeschmolzen werden, so daß eine monolithische Verbindung erreicht ist. Die Innenoberfläche der Hauptleitung bleibt dabei noch unbeschädigt.

Auf der Manschette wird ein T-förmiges Anschlußstück aus Stahl derart befestigt, daß die beiden gleichachsig ausgerichteten Rohrabschnitte sich im wesentlichen senkrecht zur Hauptleitung vertikal nach oben erstrecken, während der dritte Rohrabschnitt senkrecht dazu, d.h. im wesentlichen horizontal, und senkrecht zur Hauptleitung verläuft. Durch die beiden koaxialen Rohrabschnitte wird von oben ein Bohrer eingeführt, mit dem die Wandung der Hauptleitung durchbohrt werden kann. Nach dem Herausziehen des Bohrers wird die obere Öffnung des T-förmigen Anschlußstücks fluiddicht verschlossen und auf dem horizontal verlaufenden dritten Rohrabschnitt wird die Abzweigleitung angebracht.

Ein derartiges Vorgehen ist nur bei einem Anschluß an eine drucklose Hauptleitung einsetzbar, da ansonsten das Fluid aus der oberen Öffnung des Anschlußstücks nach Entnahme des Bohrers ausströmen würde. Da jedoch an eine bereits in Betrieb befindliche Hauptleitung üblicherweise mehrere Verbraucher mit Abzweigleitungen angeschlossen sind, ist es relativ aufwendig, die Hauptleitung vor dem Anbringen einer weiteren Abzweigleitung zumindest abschnittsweise drucklos zu halten. Aus diesem Grund ist es heutzutage üblich, die Abzweigleitung an die unter Druck stehende Hauptleitung anzuschließen, wobei das Austreten des Fluids zuverlässig verhindert werden muß.

Zu diesem Zweck ist es bekannt, ausgehend von dem o.g. Verfahren den dichtend eingeführten Bohrer nicht vollständig aus dem T-förmigen Anschlußstück herauszuziehen, sondern die Bohrspitze oberhalb des Anschlusses des dritten Rohrabschnittes in dem Anschlußstück zu belassen, wobei dafür gesorgt ist, daß das aus der Wandung der Hauptleitung herausgeschnittene Teil sicher an der Bohrspitze gehalten ist. Nach dem Entkoppeln der Bohrspitze von dem Bohrer wird die obere Öffnung des Anschlußstücks fluiddicht verschlossen. Obwohl bei diesem Vorgehen die Hauptleitung nicht drucklos sein muß, um eine neue Abzweigleitung anzuschließen, treten hierbei wesentliche Nachteile auf. Aufgrund der im Anschlußstück verbleibenden Bohrspitze bilden sich in diesem häufig nicht-durchströmte Kammern aus, in denen sich stehendes Wasser bilden kann, das zum Faulen neigt, so daß die hygienischen Anforderungen an beispielsweise eine Wasserleitung nicht erfüllt sind. Das Anschlußstück ist bei den bekannten Ausführungen aus Stahl ausgebildet, wodurch Probleme bei dem Anschluß der Manschette und der Abzweigleitung auftreten können, die jeweils aus Kunststoff bestehen.

Darüber hinaus erfordert das Anschlußstück eine nicht geringe Bauhöhe oberhalb der verlegten Hauptleitung. Da die Hauptleitung einen Mindestabstand von der Erdoberfläche aufweisen muß, ist es häufig notwendig, die Hauptleitung tiefer zu legen, um den Abstand von der Oberseite des Anschlußstücks zur Erdoberfläche entsprechend dem Mindestabstand ausbilden zu können. Ein derartiges Vorgehen ist zeitaufwendig und kostenintensiv.

Es könnte versucht werden, das Anschlußstück im wesentlichen horizontal an die Hauptleitung anzuschließen, jedoch verliefe dann der dritte Rohrabschnitt, an den die Abzweigleitung angeschlossen wird, entweder vertikal oder horizontal und parallel zur Hauptleitung. In beiden Fällen wäre eine Umlenkung der Abzweigleitung in die horizontale, senkrecht zur Hauptleitung verlaufende Richtung notwendig.

Der Erfindung liegt die Aufgabe zugrunde, ein Verfahren, mit dem die Abzweigleitung schnell und in einfacher Weise an die unter Druck stehende Hauptleitung anschließbar ist, sowie eine entsprechende Anschlußvorrichtung zu schaffen.

Hinsichtlich des Verfahrens wird diese Aufgabe erfindungsgemäß durch die Merkmale des Anspruchs 1 gelöst, die das im folgenden beschriebene Vorgehen beinhalten:

Es wird ein Anschlußstück verwendet, daß aus einem gradlinigen unverzweigten Rohrstutzen sowie einer Ventilvorrichtung aufgebaut ist, deren Ventilkörper wahlweise in eine den Strömungskanal des Rohrstutzens freigebende oder absperrende Stellung bringbar ist. Das Anschlußstück wird in fluiddichter Weise auf der Außenseite der Hauptleitung derart angebracht, daß der Rohrstutzen im wesentlichen senkrecht zur Hauptleitung sowie horizontal verläuft. Das Anbringen des Anschlußstücks an die aus Kunststoff bestehende Hauptleitung kann beispielsweise mittels einer Kunststoffmanschette bzw. -schelle erfolgen, die mit der Wandung der Hauptleitung verschweißt wird. In bevorzugter Ausgestaltung wird auch das Anschlußstück aus Kunststoff mit der Manschette bzw. Schelle verschweißt. Die Ventilvorrichtung ist in bevorzugter Ausgestaltung von einem Kugelhahn gebildet, dessen Gehäuse mit dem Rohrstutzen einstückig ausgebildet ist. Die Ventilvorrichtung ist dabei an dem der Hauptleitung zugewandten Ende des Anschlußstückes angeordnet.

Um die Wandung der Hauptleitung zu durchbohren und somit eine Verbindung zwischen dem Rohrstutzen und der Hauptleitung herzustellen, wird auf das freie Ende des Rohrstutzens in fluiddichter Weise eine Bohrvorrichtung aufgesetzt. Dies kann beispielsweise durch Aufschrauben oder Verklemmen unter Zwischenschaltung von entsprechenden Dichtungen erreicht werden. Der Bohrer wird durch den Strömungskanal des Rohrstutzens und die Ventilvorrichtung hindurch soweit vorgeschoben, bis er mit der Wandung der Hauptleitung in Kontakt kommt. Durch Kopplung des Bohrers mit einem entsprechenden motorischen oder manuellen Antrieb kann aus der Wandung der Hauptleitung ein Stück herausgebohrt werden. Dabei kann zwar das in der Hauptleitung befindliche Fluid in den Strömungskanal des Anschlußstückes eindringen, jedoch ist dieser durch die Bohrvorrichtung gegenüber der umgebenden Atmosphäre fluiddicht verschlossen. Der Bohrer wird dann entlang des Strömungskanals des Anschlußstücks soweit zurückgezogen, bis sich die Bohrspitze der Bohrvorrichtung hinter der Ventilvorrichtung, d.h. auf der stromauf gelegenen Seite der Ventilvorrichtung befindet. Mittels des Ventilkörpers wird anschließend der Strömungskanal des Rohrstutzens geschlossen. Da sich die Bohrvorrichtung nunmehr vollständig auf der stromauf gelegenen Seite der Ventilvorrichtung befindet, kann die fluiddichte Anbringung der Bohrvorrichtung an dem Rohrstutzen gelöst werden, ohne daß das Fluid austreten kann. Nach Entfernen der Bohrvorrichtung kann auf dem freien Ende des Rohrstutzens die vorzugsweise aus Kunststoff bestehende Abzweigleitung angebracht werden, wobei sich ein Verschweißen der Abzweigleitung mit dem Rohrstutzen bewährt hat. Auf diese Weise kann schnell und zuverlässig eine Abzweigleitung an eine unter Druck stehende Hauptleitung angeschlossen werden, wobei sich der Strömungskanal des Anschlußstückes gradlinig in Richtung der gewünschten, horizontalen und senkrecht zur Hauptleitung verlaufenden Richtung erstreckt. Die Bildung von Bereichen stehenden Fluids, insbesondere Wassers, ist auf diese Weise ausgeschlossen. Darüber hinaus kann die Bohrvorrichtung, da sie aus dem Anschlußstück vollständig wieder entnommen wird, mehrfach verwendet werden. Bei Bedarf kann die Bohrspitze bzw. das Bohrmesser, die bzw. das am Bohrer auswechselbar gelagert ist, nach entsprechender Abnutzung ausgetauscht werden.

Da die Abzweigleitung ohne Umlenkung direkt horizontal zur Hauptleitung verläuft, ist eine Verringerung des Abstandes zwischen den Leitungen und der Erdoberfläche ausgeschlossen, so daß sich ein Tieferlegen der Hauptleitung erübrigt.

Wenn die Wandung der unter Druck stehenden Hauptleitung durchbohrt wird, wirkt der Leitungsdruck plötzlich an der Stirnfläche des Bohrers auf diesen ein und drückt ihn bzw. seinen Schaft in dem Strömungskanal schlagartig nach hinten. Um ein übermäßiges Zurückschlagen des Bohrers zu verhindern, kann vorgesehen sein, daß dessen axiale Verstell- bzw. Hubbewegung in hydraulischer Weise gedämpft ist. Vorzugsweise kann eine an sich bekannte Öl-Dämpfung vorgesehen sein, die eine Ölkamner und einen in der Ölkammer verschieblich gelagerten, dichtend geführten Kolben aufweist, der die Ölkammer in zwei Teilkammern unterteilt. Der Kolben besitzt eine Durchgangsbohrung, durch die das Öl bei einer Verschiebung des Kolbens von der einen Teilkammer in die andere Teilkammer strömen kann, wodurch die Hubbewegung des Kolbens gedämpft ist.

Vor dem Durchbohren der Wandung der Hauptleitung sollte überprüft werden, ob die Manschette des Anschlußstückes mit der Oberfläche der Hauptleitung eine fluiddichte Verbindung gebildet hat. Vorzugsweise wird deshalb vor dem Durchbohren eine Dichtheitsprüfung durchgeführt. Zu diesem Zweck wird in bevorzugter Ausgestaltung der Erfindung in den Strömungskanal des Rohrstutzens ein Fluid, vorzugsweise Luft oder Wasser, unter Druck eingebracht. Das hintere Ende des Rohrstutzens ist dabei durch die Bohrvorrichtung in fluiddichter Weise verschlossen, so daß kein Fluid aus dem Strömungskanal entweichen kann, wenn eine dichte Verbindung zwischen der Manschette und der Hauptleitung vorliegt.

Auf diese Weise ist sichergestellt, daß die unter Druck stehende Hauptleitung erst dann angebohrt wird, wenn feststeht, daß zwischen der Manschette und der Hauptleitung eine dichte Verbindung besteht und dort kein Fluid austreten kann.

In Weiterbildung der Erfindung ist vorgesehen, daß das Fluid über einen in der Bohrvorrichtung ausgebildeten Anschluß, beispielsweise in Form einer Kupplung mit integriertem Rückschlagventil, eingebracht wird. Zur Durchführung der Dichtheitsprüfung wird dabei zunächst die Bohrvorrichtung fluiddicht auf das hintere frei Ende des Rohrstutzens aufgesetzt. Dabei ist das hintere Ende der Bohrvorrichtung ebenfalls fluiddicht verschlossen. An der Bohrvorrichtung ist der Anschluß ausgebildet, der mit einer Fluidleitung koppelbar ist und über den der Innenraum der Bohrvorrichtung und der Strömungskanal des Rohrstutzens mit dem Fluid unter Druck auffüllbar ist.

Aufgrund der Ausbildung des Anschlusses für das Druckfluid an der Bohrvorrichtung ist der konstruktive Mehraufwand minimiert, da die Bohrvorrichtung für eine Vielzahl von Anschlußvorrichtungen wiederverwendet werden kann.

Hinsichtlich der Anschlußvorrichtung zum Anschließen einer Abzweigleitung an eine fluidführende Hauptleitung, insbesondere nach dem vorgenannten Verfahren, sind eine Kunststoffmanschette bzw. -schelle, die mit der Wandung der Hauptleitung auf der Außenseite in fluiddichter Weise verbindbar ist, und ein Anschlußstück vorgesehen, das mit der Manschette verbindbar ist und das einen im wesentlichen senkrecht zur Hauptleitung verlaufenden Rohrstutzen sowie eine Ventilvorrichtung aufweist, deren Ventilkörper wahlweise in eine den Strömungskanal des Rohrstutzens freigebende oder absperrende Stellung bringbar ist. Erfindungsgemäß ist dabei vorgesehen, daß die Manschette, das Gehäuse der Ventilvorrichtung und der Rohrstutzen aus einem einstückigen Kunststoff-Teil gebildet sind, was durch Ausbildung als gemeinsames Spritzteil oder auch durch Bildung eines monolithischen Körpers durch thermisches Verschweißen der Einzelteile erreicht werden kann. Auf diese Weise kann die gesamte Anschlußvorrichtung aus einem homogenen Werkstoff fabrikseitig vorgefertigt werden und muß auf der Baustelle nicht aus mehreren Einzelteilen zusammengesetzt werden. Dadurch kann ein hochpräziser Anschluß der Abzweigleitung an die Hauptleitung erreicht werden.

Es hat sich bewährt, als Ventilvorrichtung einen Kugelhahn zu verwenden, jedoch sind auch andere Ventilausgestaltungen denkbar, soweit sie ermöglichen, daß der Bohrer den Strömungskanal des Anschlußstückes vollständig durchdringen kann. Dies kann u.a. auch dadurch erreicht werden, daß der Ventilkörper vollständig aus dem Strömungskanal herausgezogen werden kann.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: einen Längsschnitt durch eine erfindungsgemäße Anschlußvorrichtung,
- Figur 2: die Anschlußvorrichtung gemäß Figur 1 mit aufgesetzter Bohrvorrichtung und
- Figur 3: eine vergrößerte Darstellung der Bohrvorrichtung gemäß Figur 2.

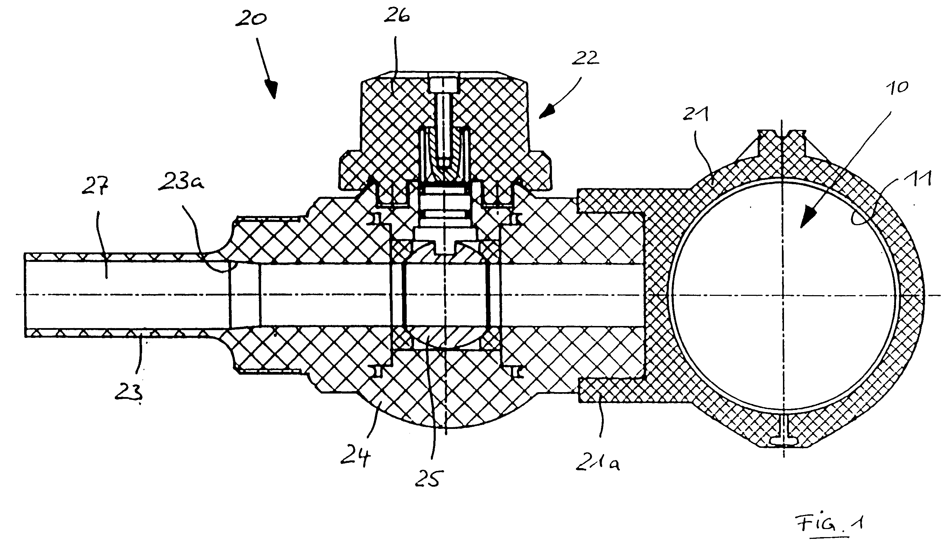

Die in Figur 1 dargestellte Anschlußvorrichtung dient dem Anschließen einer nicht dargestellten Abzweigleitung an eine Hauptleitung 10. Die Anschlußvorrichtung weist eine aus Kunststoff bestehende Manschette 21 auf, die um das Rohr der Hauptleitung 10, das aus Polyäthylen besteht, in engem Kontakt herumgelegt werden kann. In die Manschette 21 sind nicht dargestellte Heizspiralen eingebettet, durch deren Aktivierung das Material der Manschette 21 mit der Wandung 11 der Hauptleitung 10 verschweißt werden kann.

Am radial äußeren Ende der Manschette 21 ist ein aus Kunststoff bestehendes Anschlußstück 20 über einen umlaufenden Kragen 21a angeschweißt. Das Anschlußstück 20 weist einen sich im wesentlichen horizontal sowie senkrecht zur Hauptleitung erstreckenden Rohrstutzen 23 auf, der einen gradlinigen, horizontalen Strömungskanal 27 bildet. In dem an die Manschette 21 anschließenden Abschnitt des Rohrstutzens 23 ist dieser von einem Gehäuse 24 einer als Kugelhahn ausgestalteten Ventilvorrichtung 22 umgeben und einstückig verbunden. Der Kugelhahn 22 weist den bekannten Aufbau mit einem im Gehäuse 24 drehbar gelagerten Ventilkörper 25 auf, der mittels eines außenseitigen Betätigungselementes in Form eines Stellknopfes 26 wahlweise in eine den Strömungskanal 27 des Rohrstutzens 23 freigebende oder verschließende Stellung drehbar ist. Der Durchflußquerschnitt des Ventilkörpers 25 entspricht dabei dem Querschnitt des Strömungskanals 27. Am freien, der Manschette 21 abgewandten Ende des Anschlußstückes 20 ist der Rohrstutzen 23 als Zylinderrohr ausgebildet, auf das eine nicht dargestellte Abzweigleitung aufsetzbar ist.

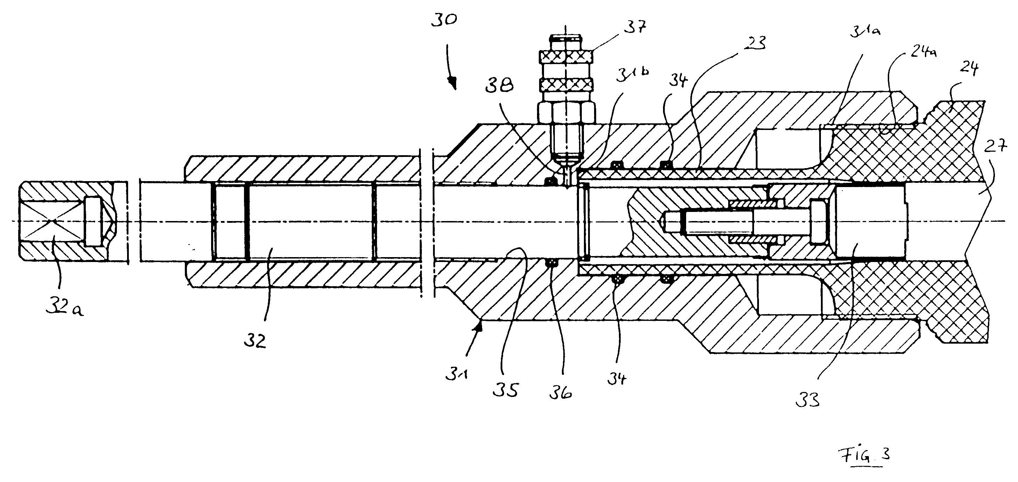

In Figur 3 ist eine Bohrvorrichtung 30 mit einem rohrförmigen Gehäuse 31 dargestellt, das mit enger Passung auf das freie Ende des Anschlußstücks 20 aufsetzbar ist. In seinem das Anschlußstück 20 übergreifenden Bereich ist das Gehäuse 31 der Bohrvorrichtung 30 mit einem Innengewinde 31a versehen, das mit einem auf dem Gehäuse 24 der Ventilvorrichtung 22 ausgebildeten Außengewinde 24a in Eingriff treten kann. Dabei ist die Sollposition der Bohrvorrichtung 30 auf dem Anschlußstück 20 durch einen inneren Anschlag 31b im Gehäuse 31 definiert, gegen den das freie Ende des Rohrstutzens 23 beim Aufschrauben anläuft. Zwischen der Außenoberfläche des Rohrstutzens 23 und der Innenoberfläche des Gehäuses 31 der Bohrvorrichtung 30 sind mehrere Ringdichtungen 34 angeordnet, die einen dichten Abschluß der Bohrvorrichtung 30 gewährleisten. In der in Figur 3 gezeigten montierten Position ist die Durchgangsbohrung 35 des Gehäuses 31 mit dem im wesentlichen querschnittsgleichen Strömungskanal 27 des Anschlußstücks 20 fluchtend ausgerichtet.

Am freien Ende der Bohrvorrichtung 30 kann in die Mittelbohrung 35 des Gehäuses 31 ein Bohrer 32 bekannten Aufbaus eingeführt werden, der über eine endseitige Kupplung 32a mit einem nicht dargestellten Drehantrieb koppelbar ist. Der Bohrer 32 weist eine derartige Länge auf, daß er in die Mittelbohrung 35 des Gehäuses 31 bzw. den Strömungskanal 27 des Anschlußstücks 20 soweit eingeschoben werden kann, bis seine Bohrspitze 33 mit der Wandung 11 der Hauptleitung 10 in Kontakt kommt, wobei die Kupplung 32a noch außerhalb des Gehäuses 31 angeordnet ist. Der Bohrer 32 ist über einen zwischen seiner Außenseite und der Gehäuseinnenseite eingesetzten Dichtungsring 36 abgedichtet.

Um das Einschieben des Bohrers 32 zu erleichtern, weist der Strömungskanal 27 am freien Ende des Anschlußstücks 20 einen geringfügig größeren Durchmesser als die daran anschließende Mittelbohrung 35 des Gehäuses 31 der Bohrvorrichtung 30 auf. Mittels eines sich im Querschnitt leicht konisch verjüngenden Abschnittes 23a (Figur 1) ist der Querschnitt des Strömungskanals 27 im weiteren Verlauf wieder auf das Querschnittsmaß der Mittelbohrung 35 reduziert.

Unmittelbar hinter dem Anschlag 31b ist im Gehäuse 31 der Bohrvorrichtung 30 ein sich in wesentlichen radial erstreckender Anschluß 37 für eine Fluidleitung ausgebildet, der über eine Radialbohrung 38 mit dem Innenraum der Bohrvorrichtung in Verbindung steht. Über den Anschluß 37 kann der Innenraum der Bohrvorrichtung 30 zu Prüfzwecken mit einen Druckfluid gefüllt werden.

Im folgenden soll das Vorgehen beim Anschließen einer Abzweigleitung an eine unter Druck stehende Hauptleitung erläutert werden.

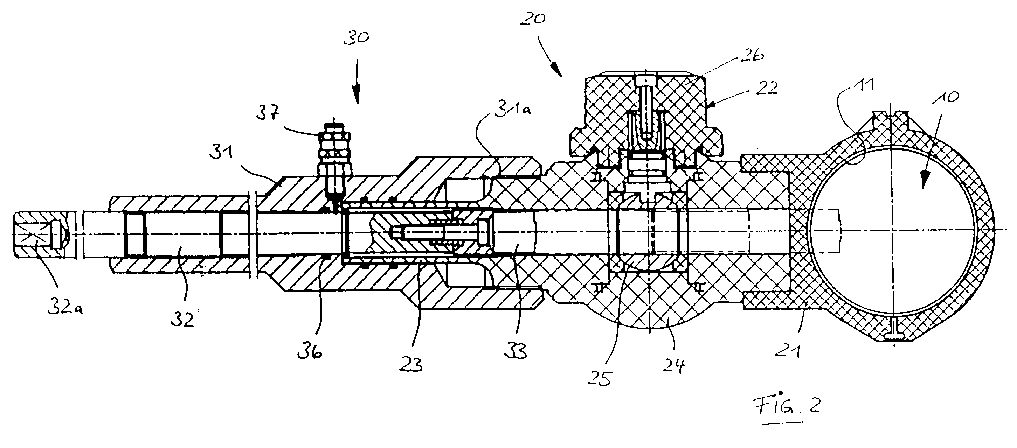

Das aus dem Anschlußstück 20 und der Manschette 21 bestehende, in Figur 1 gezeigte einstückige Bauteil wird vorgefertigt auf die Baustelle gebracht, wo die Manschette geöffnet und vollflächig um das Rohr 11 der Hauptleitung 10 gelegt und geschlossen wird. Durch Drehen des Anschlußstückes 20 um die Längsachse der Hauptleitung 10 kann der Rohrstutzen 23 in gewünschter Weise relativ zur Hauptleitung 10 ausgerichtet werden. Vorzugsweise erstreckt sich der Rohrstutzen 23 im wesentlichen horizontal zur Hauptleitung 10, wie es in den Figuren 1 und 2 dargestellt ist.

Durch Aktivieren einer in die Manschette eingebetteten, nicht dargestellten Heizvorrichtung wird das Material der Manschette innenseitig und das Material des Rohres 11 der Hauptleitung außenseitig aufgeschmolzen und fließt zu einer monolithischen, vollflächigen Verbindung zusammen. Nach Deaktivierung der Heizvorrichtung und Abkühlen der Bauteile ist das Anschlußstück 20 über die Manschette einstückig mit der Hauptleitung 10 verbunden.

Daraufhin wird auf das freie Ende des Anschlußstückes 20 das Gehäuse 31 der Bohrvorrichtung 30 aufgeschraubt, wobei dessen Mittelbohrung 35 sowie der Strömungskanal 27 des Anschlußstückes 20 sich in Fluchtung befinden. An der Anschlußstelle wird ein seitliches Austreten von Fluid durch die Dichtungsringe 34 verhindert.

Am freien Ende des Gehäuses 31 wird dann in die Mittelbohrung 35 der Bohrer 32 eingeführt und soweit vorgeschoebn, bis sein vorderes Ende mit den Dichtungen 36 in Anlage kommt, wodurch der Innenraum der Bohrvorrichtung 30 fluiddicht verschlossen ist. Über den Anschluß 37 wird dann ein Fluid unter Druck in den Innenraum der Bohrvorrichtung sowie den Strömungskanal 27 des Rohrstutzens 23 eingebracht, wobei sich der Ventilkörper 25 des Kugelhahns 22 in seiner den Strömungskanal 27 freigebenden Stellung befinden muß. Auf diese Weise kann überprüft werden, ob die Schweißverbindung zwischen der Manschette 21 und der Wandung 11 der Hauptleitung 10 fluiddicht ist oder ob infolge einer Undichtigkeit an dieser Stelle Fluid austritt.

Nachdem die Schweißverbindung überprüft und ihre Dichtigkeit festgestellt ist, wird der Bohrer 32 weiter in der Mittelbohrung 35 des Gehäuses nach vorne verschoben, bis seine Bohrspitze 33 mit der Wandung 11 der Hauptleitung in Kontakt kommt. Durch Anschluß eines Motors oder eines ähnlichen Drehantriebs an die Kupplung 32a wird der Bohrer in Drehung versetzt, wodurch die Wandung 11 der Hauptleitung 10 durchbohrt werden kann, wie in Figur 2 gestrichelt dargestellt ist. Das unter Druck stehende Fluid der Hauptleitung kann dabei in den Strömungskanal einströmen, ist jedoch an einem Austreten durch die zwischen dem Bohrer und der Innenoberfläche der Mittelbohrung 35 angeordnete Dichtung 36 sowie ein Ventil im Anschluß 37 gehindert. Der Bohrer wird dann soweit zurückgezogen, bis seine Bohrspitze den Ventilkörper 25 passiert hat, wie es in Figur 2 durchgezogen dargestellt ist. Durch Drehen des Stellkopfes 26 wird der Ventilkörper 25 in seine den Strömungskanal 27 verschließende Stellung gebracht, woraufhin der Bohrer aus dem Gehäuse 31 herausgezogen und das Gehäuse 31 von dem Anschlußstück 20 abgeschraubt wird. Anschließend wird das nicht dargestellte Rohr der Abzweigleitung auf das freie Ende des Rohrstutzens 23 aufgeschoben und mit diesem einstückig verschweißt.

## Patentansprüche

1. Verfahren zum Anschließen einer Abzweigleitung an eine fluidführende Hauptleitung (10) mit den Schritten:
- Anbringen eines Anschlußstücks (20) in fluiddichter Weise auf der Außenseite der Hauptleitung (10), wobei das Anschlußstuck (20) einen im wesentlichen senkrecht zur Hauptleitung (10) sowie horizontal verlaufenden Rohrstutzen (23) sowie eine an dem Rohrstutzen (23) angeordnete Ventilvorrichtung (22) umfaßt, deren Ventilkörper (25) wahlweise in eine den Strömungskanal (27) des Rohrstutzens (23) freigebende oder absperrende Stellung bringbar ist,
- Aufsetzen einer Bohrvorrichtung (30) auf das freie Ende des Rohrstutzens (23) in fluiddichter Weise,
- Durchbohren der Wandung (11) der Hauptleitung (10) durch den Rohrstutzen (23) und die Ventilvorrichtung (22) hindurch, wobei sich der Ventilkörper (25) in seiner den Strömungskanal (27) freigebenden Stellung befindet,
- Zurückziehen der Bohrspitze (33) der Bohrvorrichtung (30) bis hinter die Ventilvorrichtung (22),
- Schließen des Strömungskanal (27) des Rohrstutzens (23) mittels des Ventilkörpers (25),
- Abnehmen der Bohrvorrichtung (30) und
- Anbringen der Abzweigleitung am freien Ende des Rohrstutzens (23).

2. Verfahren nach Anspruch 1, dadurch gekennzeichnet, daß das Anbringen des Anschlußstücks (20) an die aus Kunststoff bestehende Hauptleitung (10) mittels einer Kunststoffmanschette (21) bzw. -schelle erfolgt, die mit der Wandung (11) der Hauptleitung (10) verschweißt wird.

3. Verfahren nach Anspruch 1 oder 2, dadurch gekennzeichnet, daß das Anschlußstück (20) aus Kunststoff besteht und mit der Manschette (21) bzw. Schelle verschweißt wird.

4. Verfahren nach einem der Ansprüche 1 bis 3, dadurch gekennzeichnet, daß die Ventilvorrichtung (22) ein Kugelhahn (24,25,26) ist, dessen Gehäuse (24) mit dem Rohrstutzen (23) einstückig ausgebildet ist.

5. Verfahren nach einem der Ansprüche 1 bis 4, dadurch gekennzeichnet, daß die Abzweigleitung mit dem Rohrstutzen (23) verschweißt wird.

6. Verfahren nach einem der Ansprüche 1 bis 5, dadurch gekennzeichnet, daß vor dem Durchbohren der Wandung der Hauptleitung eine Dichtheitsprüfung für die Verbindung des Anschlußstücks mit der Hauptleitung durchgeführt wird.

7. Verfahren nach Anspruch 6, dadurch gekennzeichnet, daß zur Durchführung der Dichtheitsprüfung in den Strömungskanal (27) des Rohrstutzens (23) ein Fluid unter Druck eingebracht wird.

8. Verfahren nach Anspruch 7, dadurch gekennzeichnet, daß das Fluid über einen in der Bohrvorrichtung (30) ausgebildeten Anschluß (37) eingebracht wird.

9. Anschlußvorrichtung zum Anschließen einer Abzweigleitung an eine fluidführende Hauptleitung, insbesondere nach den Verfahren nach einem der Ansprüche 1 bis 5, mit einer Kunststoffmanschette bzw. -schelle, die mit der Wandung der Hauptleitung auf der Außenseite in fluiddichter Weise verbindbar ist, einem Anschlußstück, das mit der Manschette verbindbar ist und das einen im wesentlichen senkrecht zur Hauptleitung verlaufenden Rohrstutzen sowie eine Ventilvorrichtung aufweist, deren Ventilkörper wahlweise in eine den Strömungskanal (27) des Rohrstutzens freigebende oder absperrende Stellung bringbar ist, dadurch gekennzeichnet, daß die Manschette (21), das Gehäuse (24) der Ventilvorrichtung (22) und der Rohrstutzen (23) aus einem einstückigen Kunststoff-Teil gebildet sind.

10. Anschlußvorrichtung nach Anspruch 9, dadurch gekennzeichnet, daß die Manschette (21), das Gehäuse (24) der Ventilvorrichtung (22) und der Rohrstutzen (23) miteinander verschweißt sind.

11. Anschlußvorrichtung nach Anspruch 9 oder 10, dadurch gekennzeichnet, daß die Ventilvorrichtung (22) ein Kugelhahn (24,25,26) ist.
